# EUROPEAN PATENT APPLICATION

(11) **EP 1 559 732 A1**
(43) Date of publication of application: **03.08.2005**
(21) Application number: 03748636.2
(22) Date of filing: 01.10.2003
(51) Int. Cl.: C08G 8/04, C08J 5/04, B22C 1/22, C04B 35/634

(54) **COLD-CURING BINDER AND PROCESS FOR PRODUCING MOLDING WITH THE SAME**

(30) Priority: 04.10.2002 JP 2002292783
(71) Applicant: E-Tec Co., Ltd., Osaka-shi, Osaka 554-0024 (JP); OSAKA PREFECTURAL GOVERNMENT, Osaka-shi, Osaka 540-0008 (JP)
(72) Inventor: WATANABE, Isao, E-Tec Co., Ltd., Osaka-shi, Osaka 554-0024 (JP); KITSUDO, Tadashi, Sakai-shi, Osaka 591-8003 (JP); HIROHATA, Takeshi, Kawachinagano-shi, Osaka 586-0044 (JP)
(74) Representative: Müller-Boré & Partner Patentanwälte
(86) International application number: PCT/JP2003/012568
(87) International publication number: WO 2004/031254

(57) **Abstract**

This invention provides an unheated-curable binder composition and a method for manufacturing a phenolic resin molded article using the binder. This invention also provides a porous ceramic molded article obtainable by setting a ceramic and the above-mentioned binder composition under unheated conditions to give a set article and then baking the set article, and a method for manufacturing the article. This invention also provides an unheated-curable binder composition having as its main components a crosslinking agent, a catalyst, and a trifunctional or tetrafunctional phenol bearing one or two electron donating groups on the benzene ring of the phenol, and a method for manufacturing a phenolic resin molded article using the binder.

## Description

### TECHNICAL FIELD

The present invention relates to an unheated-curable binder composition capable of being mixed and set under unheated conditions, and to a method for manufacturing a molded article using it.

### BACKGROUND OF THE INVENTION

Phenolic resins are ordinarily manufactured as novolak or resol by reacting a trifunctional monomer phenol and a bifunctional monomer formaldehyde together with an acid or base catalyst. Resol self-sets when heated, while novolak sets when heated with a curing agent.

In recent years, there has been much research in the field of mold casting into phenolic resin binders. These phenolic resin binders are generally classified as hot setting, cold setting and gas setting. In particular, cold setting phenolic resin binders have been developed with the aim of improving mold strength, collapsibility and curing rate, and helping the environment. Resins formed in one step by reaction of low molecular weight phenols with aldehydes, i.e., phenolic resin components (resol, novolak), continue to be used as cold setting phenolic resin binders.

Moreover, when a phenolic resin is used as binder, a method of hot pressing the resin together with a curing agent in a metal mold is used to cure the resin. For example, in order to mold and harden ceramics and other inorganic compositions, it is necessary to mix the inorganic composition with a suitable amount of binder resin and to heat them at a high temperature of 150°C or more in a molding machine using a metal mold. Consequently, a large amount of energy is required along with expensive heating equipment. In addition, there is the danger that harmful substances will be vaporized during heating, raising many issues from the standpoint of work environment and human health.

### DISCLOSURE OF THE INVENTION

It is an object of the present invention to provide an unheated-curable binder composition capable of resolving or greatly ameliorating the aforementioned problems of background art. Moreover, it is an object of the present invention to provide a method for manufacturing various molded articles of phenolic resin using this unheated-curable binder composition.

As a result of intensive research toward achieving the aforementioned objects, the inventors found that by reacting a specific phenol together with a crosslinking agent under specific conditions setting could be achieved without a heating step and without a resol or novolak intermediate, and they accomplished the present invention after further development.

That is, the present invention provides the unheated-curable binder composition and a method for manufacturing phenolic resin molded article using it as described below.
Item 1. An unheated-curable binder composition comprising as its main components a trifunctional or tetrafunctional phenol bearing one or two electron donating groups on the benzene ring of the phenol, a crosslinking agent, and a catalyst.
Item 2. An unheated-curable binder composition according to Item 1 above, wherein the trifunctional or tetrafunctional phenol is at least one member selected from the group consisting of 1,2-dihydroxybenzene, 1,3-dihydroxybenzene (resorcinol), 1,3,5-trihydroxybenzene, *meta*-cresol, and 3,5-dimethylphenol.
Item 3. An unheated-curable binder composition according to Item 1 or 2 above, wherein the crosslinking agent is at least one aldehyde selected from the group consisting of formaldehyde, acetaldehyde, benzaldehyde, paraformaldehyde, trioxane, phthalaldehyde, isophthalaldehyde and terephthalaldehyde, and/or at least one xylene glycol selected from the group consisting of ortho-xylene glycol, para-xylene glycol, *meta*-xylene glycol, 1,3,5-trimethylolbenzene, 1,2,4-trimethylolbenzene, and 1,2,3-trimethylolbenzene.
Item 4. An unheated-curable binder composition according to any one of Items 1, 2 and 3 above, wherein the catalyst is an acid catalyst or base catalyst.
Item 5. An unheated-curable binder composition according to Item 4 above, wherein the acid catalyst is an inorganic acid catalyst or organic acid catalyst.
Item 6. An unheated-curable binder composition according to Item 4 above, wherein the base catalyst is an inorganic base catalyst or organic base catalyst.
Item 7. An unheated-curable binder composition according to Item 5 above, containing 0.2 to 2.0 moles of crosslinking agent and 0.005 to 0.3 moles of acid catalyst per mole of trifunctional or tetrafunctional phenol.
Item 8. An unheated-curable binder composition according to Item 6 above, containing 0.2 to 2.0 moles of crosslinking agent and 10⁻⁵ to 0.3 moles of base catalyst per mole of the trifunctional or tetrafunctional phenol.
Item 9. An unheated-curable binder kit containing a first liquid comprising a solvent and a trifunctional or tetrafunctional phenol bearing one or two electron donating groups on the benzene ring of the phenol, together with a second liquid comprising a cross-linking agent, a catalyst and a solvent.
Item 10. An unheated-curable binder kit containing a first liquid comprising a solvent, a catalyst and a trifunctional or tetrafunctional phenol bearing one or two electron donating groups on the benzene ring of the phenol, together with a second liquid comprising a cross-linking agent and a solvent.
Item 11. A method for manufacturing a phenolic resin molded article, wherein a mixture comprising a base material, the unheated-curable binder composition according to any one of Items 1 through 8 above, and solvent as necessary, is molded and set under unheated conditions.
Item 12. A manufacturing method according to Item 11 above, wherein the resulting set article is thereafter baked.
Item 13. A manufacturing method according to Item 12 above, wherein the base material is at least one member selected from the group consisting of ceramics, carbon, natural minerals, glass, metal, wood splinter, pulpwood, waste cotton, cloth scraps and paper.
Item 14. A phenolic resin molded article obtainable by the manufacturing method according to any one of Items 11 through 13 above.
Item 15. A method for manufacturing a sand mold for casting comprising the steps of:
   (A) mixing molding sand, a solvent, and the unheated-curable binder composition according to any one of Items 1 through 8 above, and
   (B) casting the resulting mixture into a molding form and molding and setting it under unheated conditions.
Item 16. A sand mold for casting obtainable by the manufacturing method according to Item 15 above.
Item 17. A method for manufacturing a porous ceramic molded article comprising the steps of:
   (C) mixing a ceramic powder, a surfactant, a solvent, a phosphate and the unheated-curable binder composition according to any one of Items 1 through 8 above,
   (D) casting the resulting mixture into a molding form and molding and setting it under unheated conditions, and
   (E) baking the resulting set article at 600 to 1900°C.
Item 18. A porous ceramic molded article obtainable by the manufacturing method according to Item 18 above.
Item 19. A method for manufacturing a ceramic molded article comprising the steps of:
   (F) mixing a ceramic powder, a phosphate (or hydrate thereof) and the unheated-curable binder composition according to any one of Items 1 through 8 above,
   (G) casting the resulting mixture into a molding form and molding and setting it under unheated conditions, and
   (H) baking the resulting set article at 600 to 1900°C.
Item 20. A ceramic molded article obtainable by the manufacturing method according to Item 19 above.
Item 21. A method for manufacturing a sagger comprising the steps of:
   (I) mixing sintered or fused magnesia or fused or sintered spinel, a non-aqueous solvent and the unheated-curable binder composition according to any one of Items 1 through 8 above,
   (J) casting the resulting mixture into a sagger form and molding and setting it under unheated conditions, and
   (K) baking the resulting set article at 600 to 1900°C.
Item 22. A manufacturing method according to Item 21 above, wherein the molding method is slip casting.
Item 23. A method for manufacturing a carbon/carbon composite material, wherein a mixture comprising a solvent and the unheated-curable binder composition according to any one of Items 1 through 8 above is brought into contact with carbon fibers to form a coating, the coating is then set under unheated conditions, and the resulting set coating is then baked.
Item 24. A carbon/carbon composite material obtainable by the manufacturing method according to Item 23 above, wherein the final carbon content of the resin is at least 60%.

### DETAILED DESCRIPTION OF THE INVENTION

The present invention is explained in detail below.

### I. Unheated-curable binder composition

The main components of the unheated-curable binder composition of the present invention are a trifunctional or tetrafunctional phenol (bearing one or two electron-donating groups on the benzene ring of the phenol), a crosslinking agent and a catalyst.

The unheated-curable binder composition of the present invention has a feature that a setting reaction is achieved by mixing the aforementioned components under unheated conditions. " unheated" here signifies that no heating treatment is required, and "unheated-curable binder composition " signifies that setting can be achieved naturally without heating treatment. That is, the reaction is normally achieved in the present invention by mixing the aforementioned components at room temperature (such as about 0 to 35°C).

The trifunctional or tetrafunctional phenol used in the present invention has one or two electron-donating groups on the benzene ring of the phenol. "Trifunctional or tetrafunctional" here signifies that three or four carbon positions of the benzene ring of the phenol are capable of reacting with a crosslinking agent. Electron-donating groups of trifunctional or tetrafunctional phenols are groups capable of increasing the electron density of the benzene ring of the phenol when substituted on the benzene ring, and may be any group that does not adversely affect the three-dimensional setting reaction. Examples include hydroxy, lower alkyl, lower alkoxy and other groups.

Examples of lower alkyl groups include straight-chain and branched-chain alkyl groups with 1 to 6 carbon atoms, and specific examples include methyl, ethyl, *n*-propyl, *iso*-propyl, *n*-butyl, *sec*-butyl, *iso*-butyl, *tert*-butyl, *n*-pentyl and *n*-hexyl, and the like. Methyl and ethyl groups are preferred.

Examples of lower alkoxy groups include straight-chain and branched-chain alkoxy groups with 1 to 6 carbon atoms, and specific examples include methoxy, ethoxy, *n*-propyloxy, *iso*-propyloxy, *n*-butyloxy, *sec*-butyloxy, *iso*-butyloxy, *tert*-butyloxy, *n*-pentyloxy, and *n*-hexyloxy and the like. Methoxy and ethoxy groups are preferred.

Specific examples of trifunctional or tetrafunctional phenols include 1,2-dihydroxybenzene, 1,3-dihydroxybenzene (resorcinol), 1,3,5-trihydroxybenzene, meta-cresol and 3,5-dimethylphenol. At least one member selected from the group consisting of these can be used. Of these, resorcinol is preferably used from the viewpoint of reactivity, ease of handling, safety, cost, etc. The first three are preferred when a water-soluble binder composition, i.e. a binder composition usable in combination with water as the solvent, is used, while the last two are preferred if a non-aqueous binder composition is used, i.e. a binder composition that is used without water as the solvent.

The crosslinking agent used in the present invention is one which can react with a carbon atom of the benzene ring of a trifunctional or tetrafunctional phenol, and specifically is one which can react with a carbon of the benzene ring at an *ortho-* and para-position of a phenolic hydroxy group and undergoes dehydrative condensation and polymer crosslinking. Examples of crosslinking agents include various aldehydes and xylene glycols. There are no particular limitations on the kinds of aldehydes, and examples include formaldehyde, acetaldehyde, benzaldehyde, paraformaldehyde, trioxane and other difunctional aldehydes; and phthalaldehyde, isophthalaldehyde, terephthalaldehyde and other tetrafunctional aldehydes; and the like. Benzaldehyde and terephthalaldehyde are particularly desirable from the viewpoint of reducing the environmental burden. There are no particular limitations on the kinds of xylene glycols, and examples include ortho-xylene glycol, para-xylene glycol, meta-xylene glycol, 1,3,5-trimethylolbenzene, 1,2,4-trimethylolbenzene, 1,2,3,-trimethylolbenzene and the like.

The catalyst used in the present invention may be a known catalyst, such as for example an acid or base catalyst.

There are no particular limitations on the acid catalyst as long as it can be used to catalyze the aforementioned polymer crosslinking reaction (dehydrative condensation reaction), and known inorganic acids and organic acids can be used. For example, a wide range of known acids such as hydrochloric acid, sulfuric acid, nitric acid, phosphoric acid and other mineral acids; *para*-toluenesulfonic acid, phenolsulfonic acid, benzenesulfonic acid, methanesulfonic acid, trifluoromethanesulfonic acid and other organic acids; and boron trifluoride, titanium tetrachloride, aluminum chloride and other Lewis acids, etc. can be used. A volatile acid such as hydrochloride acid is desirable from the viewpoint of not leaving residual acid in the phenolic resin after reaction, while para-toluenesulfonic acid and phenolsulfonic acid are desirable out of environmental and operational considerations and the like.

There are no particular limitations on the kinds of base catalyst as long as it can be used to catalyze the aforementioned polymer crosslinking reaction (dehydrative condensation reaction), and known inorganic bases and organic bases can be used. For example, a wide range of known bases such as sodium hydroxide, potassium hydroxide, barium hydroxide, potassium carbonate, sodium carbonate, ammonia (including aqueous solutions thereof), calcium hydroxide, magnesium hydroxide and other inorganic bases; and monomethylamine, dimethylamine, trimethylamine, triethylamine, diisopropylethylamine, *N*-methylpiperidine, *N*-methylmorpholine, pyridine, *N,N*-dimethylaminopyridine (DMAP), 1,8-diazabicyclo[5.4.0]undec-7-ene (DBU), 1,5-diazabicyclo[4,3,0]non-5-ene (DBN), tetrabutylammonium hydroxide, tetraethylammonium hydroxide and other organic bases and the like can be used. An organic or other base which is volatile or decomposes in response to heat is desirable from the standpoint of not leaving a residual base in the phenolic resin after the reaction, while ammonia, monomethylamine, dimethylamine and trimethylamine are desirable out of environmental and operational considerations and the like.

Moreover, additives can also be included as necessary in the unheated-curable binder composition of the present invention. Examples of additives include fillers, plasticizers, promoters, lubricants, colorants, denaturants, stabilizers, antioxidants, surfactants and the like. Such additives can be selected appropriately according to the intended use.

### II. Unheated-curable binder kit

The unheated-curable binder composition of the invention can be also prepared in the form of a kit to promote ease of handling.

For example, a first liquid comprising a solvent and the aforementioned trifunctional or tetrafunctional phenol, and a second liquid comprising a crosslinking agent and a solvent can be prepared as a kit. These two liquids are then mixed and set by adding a catalyst thereto. The catalyst can instead be added in advance to the first or second liquid, after which the first and second liquid can be mixed and set.

Alternatively, when a room temperature (such as about 0 to 35°C) liquid crosslinking agent is used in the aforementioned second liquid, the solvent can be omitted in this second liquid.

The solvents used in the first and second liquid are preferably identical or easily miscible with one another. In this case, even if the binder components are themselves solids, a homogenous phenolic resin molded article can be obtained because the solid binder dissolves and is adequately dispersed in these solvents.

### III. Method for manufacturing phenolic resin molded article

The phenolic resin molded article of the present invention is manufactured by molding and setting a mixture comprising a base material, the aforementioned unheated-curable binder composition, and a solvent as necessary under unheated conditions.

The base material used in manufacturing the phenolic resin molded article is one which can serve as an aggregate for the phenolic resin molded article, and one of a known material, morphology, etc. can be adopted. Examples include ceramics, carbon, natural minerals, glass, metal and other inorganic base materials; and wood splinter, pulpwood, waste cotton, cloth scraps, paper (kraft paper, lint paper and the like) and other organic base materials;etc. One or more can be selected from the group consisting of these. The morphology of the base material can be selected appropriately according to the object, and examples include a variety of forms such as powder, granules, flakes, sheets, plates and the like.

Examples of ceramics include aluminum oxide, beryllium oxide, cerium oxide, chromium oxide, cobalt oxide, iron oxide, nickel oxide, silicon oxide, tantalum oxide, thallium oxide, titanium oxide, vanadium oxide, yttrium oxide, zinc oxide, zirconium oxide, magnesium oxide and other oxides; composite oxides of these (mullite, spinel and the like); aluminum boride, barium boride, calcium boride, cerium boride, hafnium boride, lanthanum boride, strontium boride, yttrium boride and other borides; aluminum nitride, chromium nitride, silicon nitride, titanium nitride and other nitrides; and boron carbide, chromium carbide, hafnium carbide, molybdenum carbide, silicon carbide, tantalum carbide, thallium carbide, tungsten carbide, yttrium carbide, zirconium carbide and other carbides. Moreover, one or a mixture of two or more selected from the group consisting of these can be used.

Examples of carbon include graphite, diamond, carbynes, coke, charcoal, soot, carbon black, diamond-like carbon, carbon fiber, glassy carbon, fullerenes, carbon nanotubes and the like.

Examples of natural minerals include silica rock, china clay, diatomaceous earth, silica black, perlite, zeolite, clay, kaolin, bentonite, magnesium hydroxide, magnesite, magnesia, calcium hydroxide, limestone, gypsum, apatite, talc, olivine, cordierite, sepiolite, dolomite, wollastonite, zircon silicate, feldspar, red mud, brick, mica, casting sand and the like.

Examples of glass include soda lime glass, potash lime glass, water glass, quartz glass and the like.

The metal used can for example be selected appropriately from zinc, tin, aluminum, chromium, titanium, magnesium, beryllium, copper, manganese, tungsten and the like.

There are no particular limitations on the solvent used with the unheated-curable binder composition of the present invention as long as it is capable of dissolving or suspending (dispersing) the aforementioned various components and does not adversely affect the polymerization reaction. Specific examples include water; methanol, ethanol, *n*-propanol, *iso*-propyl alcohol and other alcohol solvents; and tetrahydrofuran, dioxane and other cyclic ethers and the like. One or more chosen from the group consisting of these can be used. When using a base material unstable in water (such as MgO, CaO or the like), it is desirable to use a non-aqueous solvent (such as an alcohol solvent).

The amount of solvent used can be selected appropriately, and normally the concentration of the aforementioned trifunctional or tetrafunctional phenol can be set at about 0.05 to 10 moles/L, and preferably about 0.1 to 5 moles/L. The amount of additives used can be selected appropriately according to the intended use.

The amount of crosslinking agent used in the unheated-curable binder composition according to the method of manufacturing a phenolic resin molded article of the invention is usually about 0.2 to 2.0 moles per mole of trifunctional or tetrafunctional phenol, and specifically is about 1.1 to 1.7 moles (preferably about 1.4 to 1.6 moles) when the crosslinking agent is a difunctional aldehyde, and about 0.75 to 1.5 moles (preferably about 0.75 to 1.1 moles) if the crosslinking agent is a tetrafunctional aldehyde. In the manufacturing method of the present invention, setting normally occurs even without a catalyst after about 2 to 4 weeks of gelling, but it is preferable to add a catalyst to promote the reaction.

The amount of catalyst used is normally about 10⁻⁵ to 0.3 moles per mole of aforementioned trifunctional or tetrafunctional phenol. Specifically, in the case of an acid catalyst it is about 0.005 to 0.3 moles (and preferably about 0.01 to 0.1 moles) per mole of trifunctional or tetrafunctional phenol, while in the case of a base catalyst it is about 10⁻⁵ to 0.3 moles (and preferably about 10⁻⁴ to 10⁻² moles). When magnesia is included in the base material, setting occurs after 24 to 48 hours even without a catalyst.

The phenolic resin molded article of the present invention is manufactured by for example mixing a base material with a combination of the components of an unheated-curable binder composition, a solvent and additives as necessary (hereunder "the unheated-curable binder solution"), and normally the unheated-curable binder solution can be used in an amount of about 1 to 250 parts by weight per 100 parts by weight of the base material.

The phenolic resin molded article of the present invention can be obtained by contacting or mixing the aforementioned unheated-curable binder solution with the base material, and setting and molding the mixture in a suitable molding form under unheated conditions. The aforementioned "contacting" includes immersing the base material in the unheated-curable binder solution and coating the base material with the unheated-curable binder solution. The aforementioned "mixing" signifies combining by known methods such as stirring or shaking the unheated-curable binder solution and base material.

In particular, when the base material is in a powdered form or the like, a uniform mixture of the non-hot-setting binder solution and base material can be molded and set using known molding methods under unheated conditions. Molding methods include for example high pressure press molding, cold isostatic pressing (CIP), slip casting, CIM molding, MIM molding and the like. In particular, using the unheated-curable binder composition of the invention allows the use of slip casting, which does not require the kinds of high pressure conditions and expensive equipment used in high pressure press molding and cold isostatic pressing (CIP).

When coating a flat plate base material, the base material can be coated with and/or impregnated with the unheated-curable binder solution and dried by known methods. Known coating methods can be used such as dip coating, spin coating, brush painting, roll coating, spray coating and the like. Drying can be conducted by known methods. Flat plate base materials include paper, plate glass, plastic and the like.

The resulting raw phenolic resin molded article of the present invention is intrinsically strong and stable, but if necessary it can be baked in an inert atmosphere (such as nitrogen or argon) to give a molded article as a baked carbon body or sintered ceramic body. The baking temperature is normally about 600 to 1900°C, and can be selected appropriately within this range according to the type and amount of base material used. In this way, a stronger baked carbon body or sintered ceramic body can be manufactured by means of a baking step.

The unheated-curable binder composition of the invention has a high carbon content in the matrix resin in the molded article after baking. Consequently, it provides an extremely strong molded article in combination with a base material. In particular, it provides an excellent resin carbon content when used as a binder for carbon/carbon composite materials.

Moreover, the phenolic resin molded body of the present invention can also be manufactured by further adding an inorganic binder to a mixture comprising the aforementioned base material, the aforementioned unheated-curable binder composition, and a solvent as necessary, and molding and setting under unheated conditions. In this case the phenolic resin molded article can also be manufactured as described above. The resulting raw molded article is intrinsically strong and stable, but a baked product having glassy carbon as the principal matrix can also be obtained by additionally baking the raw molded article as necessary in inert atmosphere (such as nitrogen or argon) at a temperature of 600 to 1400°C (and preferably 800 to 1000°C). When baking is performed in air, a baked body having set inorganic binder as the principal matrix can be obtained.

Moreover, the phenolic resin molded article of the present invention can also be manufactured as an EMI shield material, anti-static material or the like if a conductive base material (graphite, metal, carbon black, carbon nanotubes or the like) is included therein in addition to the inorganic binder.

Thus, with the method for manufacturing a phenolic resin molded article of the invention, setting can be achieved in one step without producing a novolak, resol or other intermediate from the raw material trifunctional or tetrafunctional phenol, and no heat treatment is required for setting. That is, by merely mixing the raw materials, a polymerization reaction is promoted by the reaction heat generated from the raw materials themselves to give a set molded article, and accordingly handling is easy and there is no need for expensive heat treatment equipment.

Moreover, in the method for manufacturing a phenolic resin molded article of the present invention, because the curing rate can be adjusted by varying the amount of acid added, the type of trifunctional or tetrafunctional phenol, and the amount of solvent used and the like, the working life can be set as desired. That is, instantaneous setting is possible, and so is slow setting to allow the working time needed for mold injection and the like. The resulting phenolic resin molded article has dimensional stability and is very strong.

Moreover, by using the unheated-curable binder composition of the present invention it is possible to easily manufacture complex and precisely shaped phenolic resin molded articles.

Moreover, the unheated-curable binder composition of the present invention has a feature that the unheated-curable binder components can be molded by themselves without using a base material.

### IV. Applications for the unheated-curable binder composition

The unheated-curable binder composition of the present invention is used as a raw manufacturing material for the aforementioned phenolic resin molded article and the like, and can also be used for an extremely wide range of uses according to the intended purpose. Examples of such uses are given in detail below.

### Sand mold for casting

The present invention also provides a method for manufacturing a sand mold for casting purposes as a specific example of a method for manufacturing a phenolic resin molded article using the aforementioned unheated-curable binder composition.

The manufacturing method for a sand mold for casting comprises a step (A) of mixing a mixture of casting sand, a solvent and the unheated-curable binder composition, and a step (B) of casting the resulting mixture into a molding form and molding and setting it under unheated conditions.

Examples of the casting sand in step (A) include mullite, silica sand, zirconia sand, chromite sand, olivine sand, reclaimed sands of these and the like. The average particle size is about 50 to 1200 µm and preferably about 150 to 250 µm. A specific example is Cerabeads manufactured by Itochu Ceratech. The unheated-curable binder composition and solvent mentioned above can be used.

The amounts of the aforementioned raw material used can be, per 100 parts by weight of casting sand, about 10 to 30 parts by weight of solvent and about 1 to 5 parts by weight of the total of all components of the unheated-curable binder composition. A known method such as knead milling or the like can be adopted for uniformly mixing the raw materials.

In step (B), the mixture obtained in step (A) is poured into a suitable molding form before it begins to set, and reacted and set. Of course, it may be reacted under unheated conditions, and for example the setting reaction progresses rapidly even if the ambient temperature is around room temperature. After completion of the setting reaction, the molding form is removed to obtain a sand mold for casting. Considering the step of pouring molten metal into the resulting sand mold for casting, when water is used as the solvent in step (A), the resulting sand mold for casting should be dried by a known method such as natural drying or microwaving.

### Porous ceramic molded article

The present invention also provides a method for manufacturing a porous ceramic molded article using the aforementioned unheated-curable binder composition.

The method for manufacturing a porous ceramic molded article of the present invention comprises a step (C) of mixing a ceramic powder, a surfactant, a solvent, a phosphate and an unheated-curable binder composition, a step (D) of casting the resulting mixture into a molding form and molding and setting it under unheated conditions, and a step (E) of baking the set article at 600 to 1900°C.

That is, the porous ceramic molded article is manufactured by subjecting a molded set article obtained from a ceramic powder and the binder to a baking step. It is a feature of this manufacturing method that in the baking step the phenolic resin component and surfactant is eliminated, and setting or sintering is then accomplished by means of a phosphate added as an inorganic binder.

Examples of the ceramics usable in step (C) are the ceramics described in "III. Method for manufacturing a phenolic resin molded article" above. In particular, examples include SiC, B₄C, alumina, silica, mullite, titanium oxide, magnesium oxide, zinc oxide, zirconia and the like. Of these, mullite is desirable for improving the spalling resistance of the molded article. Alumina, silica and zirconia are desirable from the standpoint of heat resistance and toughness. The mean particle size of the ceramic powder is normally about 10 to 500 µm and preferably 50 to 300 µm considering dispersibility. The ceramics of various hollow spheres such as shirasu balloon and alumina balloons can be used as light aggregates.

As the surfactant, anionic surfactants, cationic surfactants, amphoteric surfactants and nonionic surfactants can all be used. Examples of anionic surfactants include carboxylic acid salts (fatty acid soaps and the like), sulfonic acid salts (alkylbenzenesulfonic acid and the like), sulfuric acid ester salts (alkyl sulfuric acid ester salts and the like), phosphoric acid ester salts (alkyl phosphoric acid ester salts and the like), phosphonic acid salts (alkylbenzenephosphonic acid salts and the like) and the like. Examples of cationic surfactants include amine salts (primary through tertiary amine salts and the like), quaternary ammonium salts (tetraalkyl ammonium salts and the like), phosphonium salts, sulfonium salts and the like. Examples of amphoteric surfactants include betaines (long-chain alkylamino acids and the like), sulfobetaine, sulfate betaine and the like. Examples of nonionic surfactants include fatty acid monoglyceride esters, fatty acid polyglycol esters, fatty acid sorbitan esters, fatty acid sucrose esters, fatty acid alkanol amides, polyethylene glycol condensed nonionic surfactants (such as polyoxyethylene nonylphenyl ethers) and the like. Of these, it is desirable to use those fatty acid soaps that are anionic surfactants.

The solvent can be selected appropriately from the solvents used in manufacturing the aforementioned phenolic resin molded article, and ethanol and water are desirable from the viewpoint of environmental burden.

The inorganic binder needs to be soluble in water, and preferably a phosphate compound is used without any particular limitations, although a metal salt of phosphoric acid is desirable. For example, aluminum phosphate, zinc phosphate, zirconium phosphate, sodium phosphate, magnesium phosphate and other water-soluble binders are preferrable. Hydrates of these are also acceptable (such as Al₂O₃-P₂O₅-6H₂O). Of these aluminum phosphate and its hydrate are most desirable from the standpoint of heat resistance and cost.

The trifunctional or tetrafunctional phenol, crosslinking agent and catalyst (particularly acid catalyst) mentioned above can be used for the unheated-curable binder composition.

The amounts of the aforementioned components are normally about 0.1 to 0.3 parts by weight surfactant, about 10 to 100 parts by weight solvent, about 10 to 20 parts by weight phosphate compound and about 1 to 120 parts by weight total components of unheated-curable binder composition, per 100 parts by weight of ceramic powder. All raw materials should be compounded and mixed uniformly. A known method such as wet mixing (stirring) or slurrying can be adopted as the mixing method.

Step (D) is performed in the same manner as step (B) in the aforementioned method for manufacturing a sand mold for casting.

In step (E), the set article obtained in step (D) is baked at about 600 to 1900°C to obtain the target porous ceramic molded article. A known method can be used for the baking method. For example, the set product may be heated from room temperature to about 600°C, and then baked for a fixed time at this temperature, after which the product is further heated to about an upper limit of 1900°C, baked for a fixed time, and cooled naturally. In this step, the resin binder disappears, and in place of the resin binder the phosphate polymerizes by dehydrative condensation and functions as an inorganic binder. The heat-proof temperature of the resulting baked product is about 1900°C maximum when for example alumina is used as a ceramic using aluminum phosphate as the inorganic binder. The resulting molded article is preferably used below the setting or sintering temperature of step (E).

In the method for manufacturing a porous ceramic molded body of the present invention, the setting time can be controlled by selecting the amounts of trifunctional or tetrafunctional phenol, catalyst, solvent and the like. A ceramic porous body, which has not been possible to obtain in the past, can be manufactured because there is a margin of time in which air gaps caused by bubbles can be fixed before the bubbles disappear.

The porous ceramic article of the present invention has a feature that the shrinkage of the molded article from before baking to after baking is substantially zero, and more specifically the amount of shrinkage is extremely small, about 1/1000 to 1/5000 of the length of the molded article. This excellent characteristic is believed to be because the organic binder disappears at a baking temperature of about 300 to 600°C, while the inorganic binder begins to set at a baking temperature of about 230°C and finishes setting at about 500°C. At a baking temperature of 500°C or more, the set inorganic binder becomes stronger and more stable due to its crystallization transition.

The porous ceramic molded article can be used as a heat insulating material. For example, when a porous ceramic article comprising an alumina base material is manufactured according to the aforementioned method, the heat conductivity of the molded article is low, about 0.08 to 0.12 kcal/mh°C, so it can be used advantageously as a heat insulator. By contrast, the heat conductivity of air is 0.025 kcal/mh°C.

The porous molded article obtained above can be used in a variety of filters according to the size of its pores. An example of a filter is one for aluminum smelting. The size of the pores can be controlled by known methods such as for example foaming with a surfactant or the like. The porous molded article obtained above can be used as the raw material for an inorganic porous article/metal system with new functions if metal (aluminum, nickel, titanium, silver, copper or the like) is injected into the pores.

### Ceramic molded article

The present invention also provides a method for manufacturing a relatively dense ceramic molded article using the aforementioned unheated-curable binder composition.

The method for manufacturing a ceramic molded article comprises a step (F) of mixing ceramic powder, a phosphate (or hydrate thereof) and an unheated-curable binder composition, a step (G) of casting the resulting mixture into a molding form and molding and setting it under unheated conditions, and a step (H) of baking the resulting set article at 600 to 1900°C.

The ceramic powder and unheated-curable binder composition components in step (F) may be those exemplified for the aforementioned porous ceramic molded article. The phosphate (or hydrate thereof) may be a hydrate of aluminum phosphate, zinc phosphate, zirconium phosphate, sodium phosphate, magnesium phosphate or the like (such as Al₂O₃-P₂O₅-6H₂O).

The amounts of the aforementioned components used is usually about 10 to 20 parts by weight of phosphate (or hydrate thereof) and about 1 to 5 parts by weight of the combined components of the unheated-curable binder composition, per 100 parts by weight of ceramic powder. The raw materials should be compounded and uniformly mixed by a known method such as ball milling or agitation. In this case mixing may be carried out without addition of solvent, but a solvent (such as water) can be added thereto as necessary to form a mixed slurry. The amount of water may be small and is selected appropriately according to the intended use.

In step (G), the mixture obtained in step (F) is poured into a molding form and set. There is no particular need to apply pressure during molding in this step, but pressure molding may be used. There are no particular limitations on the pressure for pressure molding as long as it allows the shape to be retained. There is no particular need for hot treatment. In this step, setting is accomplished without the use of water as a solvent because the setting reaction proceeds as water in the phosphate (hydrate) dissolves the binder components.

In step (H), the set article obtained in step (G) is treated in the same manner as in the aforementioned step (E) to obtained the target ceramic sintered article. The resulting ceramic molded article is very dense and strong.

### Sagger (ceramic semiconductor manufacturing jig)

The present invention also provides a method for manufacturing a ceramic sagger using the aforementioned unheated-curable binder composition.

The method for manufacturing a sagger comprises a step (I) of mixing a sagger manufacturing base material (such as alumina, alumina titanate, sintered or fused magnesia, or sintered or fused spinel) and an unheated-curable binder composition, a step (J) of pouring the resulting mixture into a sagger form and molding and setting it under unheated conditions, and a step (K) of baking the resulting set article at 600 to 1900°C.

A sagger is a ceramic semiconductor manufacturing jig, and conventionally to meet high quality requirements saggers have had to be molded by a high-pressure press or a CIP (cold isostatic press, a device which applies high pressure isostatically by hydrostatic pressure with a maximum atmospheric pressure of about 4000). However, by using the molding method using an unheated-curable binder composition of the present invention it becomes possible to slip cast magnesia, something that was extremely difficult in the past, with the characteristics of the molded article being equivalent to those obtained by high pressure or CIP molding.

First, in step (I), if for example sintered or fused magnesia or sintered or fused spinel has been used as the sagger manufacturing base material, due to the required characteristics of the sagger to be manufactured, the trifunctional or tetrafunctional phenol and crosslinking agent described in "I. Unheated-curable binder composition" are adopted. A base catalyst is preferred, and those with a low boiling point or decomposition point are particularly preferred so that the base catalyst component will be eliminated from the molded article during baking. For example, base catalysts such as ammonia (including aqueous solution thereof), monomethylamine, dimethylamine, trimethylamine, triethylamine, diisopropylethylamine, *N*-methylpeperidine, *N*-methylmorpholine, pyridine, *N,N*-dimethylaminopyridine (DMAP), 1,8-diazabicyclo[5.4.0]undec-7-ene (DBU), 1,5-diazabicyclo[4,3,0]non-5-ene (DBN), tetrabutylammonium hydroxide and tetraethylammonium hydroxide are advantageous. Mixing can be carried out using an aqueous solvent, but a non-aqueous solvent is preferred. Non-aqueous solvents include, for example alcohol solvents, and preferably ethanol, methanol and the like.

The amounts of the aforementioned components used is usually about 10 to 20 parts by weight of alcohol solvent and 1.5 to 7.5 parts by weight of the total components of the unheated-curable binder composition, per 100 parts by weight of fused magnesia. The amounts of the components of the unheated-curable binder composition used is usually about 0.2 to 1.8 (and preferably about 0.2 to 1.5) moles of crosslinking agent and about 10⁻⁵ to 0.3 (preferably about 10⁻⁴ to 0.1) moles of base catalyst, per mole of trifunctional or tetrafunctional phenol. These components can be mixed uniformly by a known method such as ball milling, agitation mixing or the like.

Next, in step (J) the mixture of the aforementioned components is poured into a sagger form, set for about 2 to 30 hours at room temperature and removed from the form.

Next, in step (K), the resulting set article is baked and sintered at 600 to 1900°C in the same manner as in step (E) above. The resulting molded article has no irregularities of morphology and is equivalent in porosity and strength to those molded by conventional CIP molding and baking or sintering.

### Carbon/carbon composite material

The present invention also provides a method for manufacturing a carbon/carbon composite material using the aforementioned unheated-curable binder composition.

The carbon/carbon composite material can be manufactured by for example impregnating a carbon fiber (such as plain weave PAN carbon fiber) with the aforementioned unheated-curable binder solution to form a prepreg, setting it under unheated conditions, and baking the resulting set article at about 1000°C in an inert atmosphere. The contact method of the aforementioned carbon fiber with the unheated-curable binder solution includes impregnation and coating. When phthalaldehyde, isophthalaldehyde, terephthalaldehyde or the like is used as the crosslinking agent in the unheated-curable binder composition, a strong carboncarbon composite material can be manufactured with resin carbon content of 60% or more.

The composition and concentration of the unheated-curable binder solution used and the setting conditions, baking conditions and the like can be as described under "III. Method for manufacturing phenolic resin molded article".

### BEST MODE FOR CARRYING OUT THE INVENTION

The features of the present invention are explained more clearly below with reference to examples, however, the present invention is not limited to these examples.

### Example 1

55 g (0.5 mol) of resorcinol and 5 g of *para*-toluenesulfonic acid were dissolved in 50 cc of water, and 61 g of 37% aqueous formalin solution (0.75 mol as formaldehyde) was added thereto. Gelling occurred and setting was complete in about 1 minute.

### Example 2

Following Example 1 except that the para-toluenesulfonic acid was increased to 10 g, gelling occurred and setting was complete in 10 to 20 seconds.

### Example 3

Following Example 1 except that 1 cc of concentrated hydrochloric acid was substituted for the para-toluenesulfonic acid, gelling occurred and setting was completed instantaneously.

### Example 4

Following Example 1 except that the water was increased to 100 cc, gelling occurred and setting was complete in about 2 hours.

### Example 5

Following Example 1 except that phenolsulfonic acid was substituted for the para-toluenesulfonic acid, gelling occurred and setting was complete in about 1 minute.

### Example 6

Following Example 1 except that 1,3,5-trihydroxybenzene was substituted for the resorcinol, gelling occurred and setting was completed instantaneously.

### Example 7

Following Example 1 except that benzaldehyde was substituted for the formalin, gelling occurred and setting was complete in 1 to 2 minutes.

### Example 8

1.1 g (0.01 mole) of resorcinol dissolved in 5 cc of ethanol was added to 1.34 g (0.01 mol) of terephthalaldehyde and 0.5 g para-toluenesulfonic acid dissolved in 5 cc of ethanol, and then gelling occurred and setting was complete in 10 to 20 seconds.

### Example 9

12.2 g (0.15 mol) of 37% aqueous formalin solution and 3 g of para-toluenesulfonic acid were added to 10.8 g (0.1 mol) of meta-cresol, and then gelling occurred and setting was complete in 10 to 30 minutes.

### Example 10

13.4 g (0.1 mol) of terephthalaldehyde and 5 g of *para*-toluenesulfonic acid dissolved in 20 cc of ethanol was added to 12.2 g (0.1 mol) of 3,5-dimethylphenol dissolved in 10 cc of ethanol, and then gelling occurred and setting was complete in 1 to 3 minutes.

### Example 11

Following Example 1 except that a 0.75 molar aqueous solution of para-xylene glycol was substituted for the aqueous formalin solution and 15 g of para-toluenesulfonic acid and 10 cc of concentrated hydrochloric acid were added, gelling was initiated in about 30 minutes and setting was complete in 3 hours.

### Example 12

3 parts by weight of resorcinol dissolved in 15 parts by weight of water, 3 parts by weight of para-toluenesulfonic acid dissolved in 5 parts by weight of 37% aqueous formalin solution, 15 parts by weight of 41.5% aqueous aluminum phosphate solution, and 0.15 parts by weight of anionic surfactant (Onoda Chemiko OFA-2) were added to 100 parts by weight of a ceramic composition comprising 35% by weight of alumina with an average particle size of 200 microns, 35% by weight of hollow spheres of a light alumina silica aggregate with an average particle size of 350 microns, and 30% by weight of mullite with an average particle size of 200 microns, then shaken to produce bubbles, poured into a molding form, and gelled before the bubbles disappeared.

The resultant was heated from room temperature to 600°C over 3 hours, and baked for 2 hours at the latter temperature. It was then heated from 600 to 1000°C over 2 hours, and baked at the latter temperature for 1 hour, after which it was allowed to cool to room temperature naturally. The porosity of the resulting porous article was 65%, with a relative density of 0.6 g/cm³. The amount of shrinkage of the resulting ceramic porous article at 1000°C was approximately zero.

### Example 13

1.1 part by weight of resorcinol dissolved in 10 parts by weight of ethanol and 1.34 parts by weight of terephthalaldehyde and 0.5 parts per weight of para-toluenesulfonic acid dissolved in 10 parts by weight of ethanol were added to 100 parts by weight of casting sand (mullite) with an average particle size of 200 microns, shaken well, poured into a form and left for 2 hours to form a casting mold. This casting mold was removed from the form and dried well, and filled with cast iron to obtain a casting. No smell was perceived during the series of steps for obtaining a casting from the mold.

### Example 14

A casting was obtained following Example 13 except that water was used instead of ethanol and 1.22 parts by weight of 37% aqueous formalin solution was used instead of terephthalaldehyde.

### Example 15

3 parts by weight of resorcinol dissolved in 15 parts by weight of water, 3 parts by weight of para-toluenesulfonic acid dissolved in 5 parts by weight of 37% aqueous formalin solution and 15 parts by weight of aluminum phosphate were added to 100 parts by weight of a ceramic composition comprising 35% by weight of alumina with an average particle size of 200 microns, 35% by weight of a light alumina silica aggregate comprising hollow spheres with an average particle size of 350 microns and 30% by weight of mullite with an average particle size of 200 microns, and then shaken to gel.

The resultant was heated from room temperature to 600°C over three hours, and baked at the latter temperature for 2 hours. It was then heated from 600°C to 1000°C over 2 hours, and baked at the latter temperature for 1 hour, after which it was cooled to room temperature naturally. The porosity of the resulting molded article was 35%, with a relative density of 2.5 g/cm³. The amount of shrinkage of the resulting ceramic sintered article at 1000°C was approximately zero.

### Comparative Example 1

No reaction occurred when 19 g (0.1 mol) of *para*-toluenesulfonic acid was added to 9.4 g (0.1 mol) of phenol and 12.2 g (0.15 mol) of 37% aqueous formalin solution. Subsequently, 10 cc of concentrated hydrochloric acid was further added thereto and left for more than 24 hours at room temperature, but no reaction occurred.

### Comparative Example 2

1 g of para-toluenesulfonic acid was added to 10 g of a resol type phenolic resin (Lignite AH150, water-soluble phenolic resin, resin solids 50%, average molecular weight 200-300) and left at room temperature for 10 days or more, but setting was unsatisfactory.

### Example 16

Following Example 1 except that 5 g of a 25% aqueous ammonia solution was used in place of para-toluenesulfonic acid, gelling occurred and setting was complete in 10 minutes.

### Example 17

Following Example 16 except that 10 g of a 25% aqueous ammonia solution was used, gelling occurred and setting was complete in 3 minutes.

### Example 18

Following Example 16 except that 1 g of sodium hydroxide was used in place of the 25% aqueous ammonia solution, gelling occurred and setting was complete in 1 minute.

### Example 19

Eight sheets of 5 cm-square plain weave PAN carbon fiber were impregnated with a mixture of a 35% resorcinol in methanol solution and a methanol solution of 40% terephthalaldehyde and 1% para-toluenesulfonic acid. Gelling occurred after about 10 minutes. After 30 minutes, the set article was baked at 1000°C in a nitrogen atmosphere to give a sintered article, whose matrix resin carbon content was 62%.

### Comparative Example 3

Following Example 19 except that a resol type phenolic resin was used, the carbon content of the resulting sintered article was 52%.

### Example 20

6.6 g of resorcinol, 2.7 g of terephthalaldehyde and 0.04 g of a 25% aqueous ammonia solution dissolved in 42 g of methanol was mixed well with 350 g of fused magnesia with an average particle size of 3 microns, and poured into a sagger form. The article that was removed from the form 17 hours later had no shape abnormalities, and the sintered article obtained by baking and sintering it at up to 1610°C had a porosity and strength equivalent to that of an article obtained by conventional CIP molding, baking and sintering.

### Example 21

It was possible to mold porous articles of powdered silicon carbide, boron carbide and carbon by subjecting these to the steps of Example 12.

### Example 22

A mixture of 0.6 micron alumina powder with a 35% resorcinol in methanol solution and a methanol solution of 40% terephthaldehyde and 1% para-toluenesulfonic acid was kneaded into a paste and poured into a silicon rubber drill mold to obtain an article in the shape of a drill blade. The article was baked at up to 1580°C in air to remove the binder and then sintered to obtain a ceramic drill blade. This ceramic had a specular gloss and did not require polishing, therefore secondary working was unnecessary. It has not been possible to obtain such a ceramic in the past.

### Example 23

An iron drill blade was obtained following Example 22 except that iron powder was used in place of alumina powder. In the case, however, heat treatment was performed up to 1000°C.

### INDUSTRIAL APPLICABILITY

With the unheated-curable binder composition of the present invention, there is no need for the large-scale equipment required for molding, heating, pressing and the like by background art, thus simplifying the production processes. That is, because setting is accomplished in one step from the raw material phenol without heat treatment, a phenolic resin molded article can be easily manufactured without the need for expensive molds or large amounts of energy.

Moreover, because it is possible by selection of the raw materials to achieve the same binder effect without using the malodorous and harmful substances formalin and phenol, the environment in the production steps can be greatly improved.

Moreover, because the setting time can be controlled by selecting the types and amounts of trifunctional or tetrafunctional phenol, crosslinking agent, catalyst and solvents, bubbles can be fixed before bubbling stops and it is possible to manufacture a ceramic foam (porous ceramic molded article), something that has not been possible until now.

The unheated-curable binder composition of the present invention can be used for a wide range of applications. For example, because the article obtained by baking in an inert atmosphere has a high carbon content, it can be used as a strong binder for carbon/carbon composite materials. In addition, because molding can be carried out merely by pouring the binder into a form under normal pressure, slip casting of saggers containing magnesia and the like, something that was difficult in the past, can be achieved. And because a foam (porous body) can be easily manufactured, it is possible to mold heat insulating materials, various filters and the like. Finally, it is also possible to form molded articles with complex and precise shapes from ceramics, metal powders and other base materials.

## Claims

1. An unheated-curable binder composition comprising as its main components a trifunctional or tetrafunctional phenol bearing one or two electron donating groups on the benzene ring of the phenol, a crosslinking agent, and a catalyst.

2. An unheated-curable binder composition according to Claim 1, wherein the trifunctional or tetrafunctional phenol is at least one member selected from the group consisting of 1,2-dihydroxybenzene, 1,3-dihydroxybenzene (resorcinol), 1,3,5-trihydroxybenzene, *meta*-cresol, and 3,5-dimethylphenol.

3. An unheated-curable binder composition according to Claim 1 or 2, wherein the crosslinking agent is at least one aldehyde selected from the group consisting of formaldehyde, acetaldehyde, benzaldehyde, paraformaldehyde, trioxane, phthalaldehyde, isophthalaldehyde and terephthalaldehyde, and/or at least one xylene glycol selected from the group consisting of ortho-xylene glycol, para-xylene glycol, meta-xylene glycol, 1,3,5-trimethylolbenzene, 1,2,4-trimethylolbenzene, and 1,2,3-trimethylolbenzene.

4. An unheated-curable binder composition according to any one of Claims 1, 2 and 3, wherein the catalyst is an acid catalyst or base catalyst.

5. An unheated-curable binder composition according to Claim 4, wherein the acid catalyst is an inorganic acid catalyst or organic acid catalyst.

6. An unheated-curable binder composition according to Claim 4, wherein the base catalyst is an inorganic base catalyst or organic base catalyst.

7. An unheated-curable binder composition according to Claim 5, containing 0.2 to 2.0 moles of crosslinking agent and 0.005 to 0.3 moles of acid catalyst per mole of trifunctional or tetrafunctional phenol.

8. An unheated-curable binder composition according to Claim 6, containing 0.2 to 2.0 moles of crosslinking agent and 10⁻⁵ to 0.3 moles of base catalyst per mole of the trifunctional or tetrafunctional phenol.

9. An unheated-curable binder kit containing a first liquid comprising a solvent and a trifunctional or tetrafunctional phenol bearing one or two electron donating groups on the benzene ring of the phenol, together with a second liquid comprising a cross-linking agent, a catalyst and a solvent.

10. An unheated-curable binder kit containing a first liquid comprising a solvent, a catalyst and a trifunctional or tetrafunctional phenol bearing one or two electron donating groups on the benzene ring of the phenol, together with a second liquid comprising a cross-linking agent and a solvent.

11. A method for manufacturing a phenolic resin molded article, wherein a mixture comprising a base material, the unheated-curable binder composition according to any one of Claims 1 through 8, and solvent as necessary, is molded and set under unheated conditions.

12. A manufacturing method according to Claim 11, wherein the resulting set article is thereafter baked.

13. A manufacturing method according to Claim 12, wherein the base material is at least one member selected from the group consisting of ceramics, carbon, natural minerals, glass, metal, wood splinter, pulpwood, waste cotton, cloth scraps and paper.

14. A phenolic resin molded article obtainable by the manufacturing method according to any one of Claims 11 through 13.

15. A method for manufacturing a sand mold for casting comprising the steps of:
(A) mixing molding sand, a solvent, and the unheated-curable binder composition according to any one of Claims 1 through 8, and
(B) casting the resulting mixture into a molding form and molding and setting it under unheated conditions.

16. A sand mold for casting obtainable by the manufacturing method according to Claim 15.

17. A method for manufacturing a porous ceramic molded article comprising the steps of:
(C) mixing a ceramic powder, a surfactant, a solvent, a phosphate and the unheated-curable binder composition according to any one of Claims 1 through 8,
(D) casting the resulting mixture into a molding form and molding and setting it under unheated conditions, and
(E) baking the resulting set article at 600 to 1900°C.

18. A porous ceramic molded article obtainable by the manufacturing method according to Claim 18.

19. A method for manufacturing a ceramic molded article comprising the steps of:
(F) mixing a ceramic powder, a phosphate (or hydrate thereof) and the unheated-curable binder composition according to any one of Claims 1 through 8,
(G) casting the resulting mixture into a molding form and molding and setting it under unheated conditions, and
(H) baking the resulting set article at 600 to 1900°C.

20. A ceramic molded article obtainable by the manufacturing method according to Claim 19.

21. A method for manufacturing a sagger comprising the steps of:
(I) mixing sintered or fused magnesia or fused or sintered spinel, a non-aqueous solvent and the unheated-curable binder composition according to any one of Claims 1 through 8,
(J) casting the resulting mixture into a sagger form and molding and setting it under unheated conditions, and
(K) baking the resulting set article at 600 to 1900°C.

22. A manufacturing method according to Claim 21, wherein the molding method is slip casting.

23. A method for manufacturing a carbon/carbon composite material, wherein a mixture comprising a solvent and the unheated-curable binder composition according to any one of Claims 1 through 8 is brought into contact with carbon fibers to form a coating, the coating is then set under unheated conditions, and the resulting set coating is then baked.

24. A carbon/carbon composite material obtainable by the manufacturing method according to Claim 23, wherein the final carbon content of the resin is at least 60%.
